# EUROPEAN PATENT APPLICATION

(11) **EP 4 749 598 A1**
(43) Date of publication of application: **27.05.2026**
(21) Application number: 24383311.8
(22) Date of filing: 03.12.2024
(51) Int. Cl.: G08G 1/005, H04W 4/80

(54) **INTELLIGENT, DYNAMIC, ADAPTIVE, AND INCLUSIVE SIGNAGE SYSTEM (IDAI)**

(30) Priority: 22.11.2024 ES 202432164
(71) Applicant: Interlight Sp, S. L., 14008 Córdoba (ES)
(72) Inventor: Jiménez Aguilar, Jerónimo, Córdoba (ES)
(74) Representative: Pons IP

(57) **Abstract**

The present invention describes an intelligent, dynamic, adaptive and inclusive signaling system intended to be implemented in the urban environment in which the system has a device that continuously emits Bluetooth signals and/or an RFID tag, configured to transmit information relative to the user; and a reception and control module that receives Bluetooth or RFID signals and acts according to the information it receives from these, modifying the behavior of the signaling and urban mobility elements in which the system is implemented according to the user's need.

## Description

### OBJECT OF THE INVENTION

The invention belongs to the technical field of urban signage and, in particular, relates to an Intelligent, Dynamic, Adaptive, and Inclusive Signage System (IDAI) designed to be integrated into urban signage and mobility elements.

### BACKGROUND OF THE INVENTION

Currently, there are numerous devices and signage systems designed to enhance the safety of all public road users, regardless of their physical abilities or modes of transportation. These include signage with enhanced lighting, luminous beacons, acoustic warning systems, and informational panels that facilitate the interpretation of signage under various conditions. For instance, panels in public spaces such as stations or shopping centers are equipped with specific lighting to improve visibility. Similarly, outdoor signage often features additional lighting, enhancing its visibility at night or under low ambient light conditions.

Additionally, there are systems that emit acoustic signals to alert users about specific situations, such as announcing the closing of a shopping center, the imminent departure of a train, or the status of a pedestrian traffic light for visually impaired individuals. Some of these systems include functionality in which the sound is only activated when a pedestrian is detected, thereby minimizing noise pollution and improving safety at pedestrian crossings. This approach demonstrates how technology can provide tailored solutions without disturbing the environment for the rest of the population.

There are also mobile applications that improve urban mobility for various user groups, such as older adults or those using personal mobility vehicles. These applications help plan safe routes, locate accessible infrastructure such as ramps or elevators, and navigate urban areas. An example of this is the Neatebox Pedestrian Crossing app, used in the United Kingdom, which allows the user to press a button through the app or configure it to automatically press the button within a set time interval, thus facilitating crossings and reducing anxiety for both users with disabilities and other pedestrians.

Current systems have significant limitations, such as high energy consumption, the need for advanced infrastructure, and, in some cases, a lack of interoperability between different systems and devices. Furthermore, most systems operate in a static manner, while others function uniformly and in isolation, without adapting to the specific needs of users.

There are patents related to this field, some of which have been filed by the applicant, describing dynamic traffic signaling systems for outdoor environments, with a focus on improving safety and traffic signaling to alert about movements on the roads, regardless of their nature, in a non-specific manner. As a result, this solution does not address the wide range of needs that users may have in an urban environment.

In summary, although there are technologies and devices that improve safety in urban spaces, the ability to personalize and dynamically adapt urban signage to the individual needs of users remains an area where significant advancements are needed. This is particularly relevant in an increasingly complex and diverse urban environment, where user needs are highly varied and countless.

### DESCRIPTION OF THE INVENTION

The invention describes an intelligent, dynamic, adaptive, and inclusive signage system designed to be implemented in the urban environment, comprising:
- A mobile device that includes a Bluetooth communication module, configured to keep the Bluetooth communication module continuously active, transmitting information related to a user, including at least the name, condition, and specific needs.
- An RFID tag that contains a unique identification, configured to be attached to a personal object of the user and that holds information related to the user, including at least their name, condition, and specific needs.
- A reception and control module, integrated into urban signage and mobility elements, which includes a radiofrequency receiver (Bluetooth^{®} and RFID) and a processing unit. This module is designed to detect and analyze Bluetooth^{®} and RFID signals emitted by mobile devices or radiofrequency tags, as well as signals from video surveillance systems or environmental parameter sensors. Based on the information obtained from the user, the module adapts the behavior of the urban signage and mobility elements.

In a preferred embodiment, the system further includes a server that stores all the information processed by the reception and control module.

The reception and control module is also configured to modify the behavior of the urban signage and mobility elements by activating or deactivating acoustic signals, triggering sound alerts, and adjusting their intensity.

This modification of the urban signage and mobility elements also includes the manipulation and automatic activation of access ramps or accessibility devices.

In preferred embodiments, the system also allows for the activation and modification of visual signals or pictograms by adjusting the intensity, color, or blinking frequency of the lights.

Additionally, the reception and control module is configured to modify the behavior of the urban signage and mobility elements by emitting tailored audio messages.

In the case that users with specific needs, such as Autism Spectrum Disorder (ASD), are detected, the system allows for actions such as generating calming sounds or neutralizing potentially stressful noises. Additionally, it provides audio or visual panels with warnings to other users to raise awareness and encourage behavior that minimizes discomfort.

In a preferred embodiment, the system also includes an alert module, configured to generate and send alerts in the event that the presence of the user is detected outside or inside a previously defined or delimited area or perimeter.

### DESCRIPTION OF THE FIGURES

To complement the description being made and to aid in a better understanding of the features of the invention, according to a preferred example of its practical embodiment, a set of figures is included as an integral part of this description. These figures are provided to illustrate, for non-limiting purposes, the following:

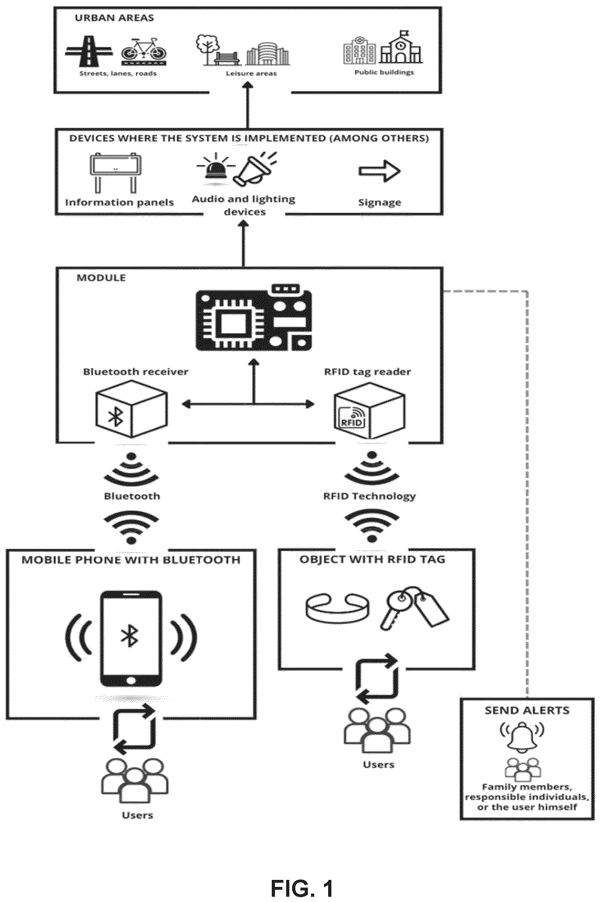

Figure 1.- Shows a block diagram of the architecture and operation of the Intelligent - Dynamic - Adaptive - Inclusive Signaling System (IDAI), excluding the optional part of road data collection and the implementation of video surveillance zones and/or environmental parameter detection.

### PREFERRED EMBODIMENT OF THE INVENTION

As can be seen in Fig. 1, the IDAI signaling system (Intelligent - Dynamic - Adaptive - Inclusive), which comprises:
- A mobile device that uses Bluetooth^{®} technology and has the Bluetooth^{®} signal continuously activated, in the case of implementing Bluetooth^{®} receivers. This device is configured with a specific name corresponding to the specific condition of each user.
- A personal item, such as a keychain, bracelet, cane, or any other article, that contains an RFID tag with a unique identification.
- A reception and control module along with the processing and control unit, configured to receive and analyze the Bluetooth^{®} and/or RFID signal; and configured to act based on them, adapting the operation of a set of signage elements according to the information received through the Bluetooth^{®} and/or RFID signals.

The system also includes an alert sending module to family members, responsible persons, or the user themselves, whenever their device allows it. The processing and control unit is responsible for this task based on the information provided by the receiver/reader.

These signage elements and devices in which the IDAI system is implemented are deployed in various areas that make up urban centers.

Preferably, the invention also includes an application or server in which information about traffic data is stored, thus facilitating the study of road usage in urban areas.

The proposed system incorporates receiver modules, which can be Bluetooth^{®} or RFID, in each signaling device, along with a processing and control unit that manages the process. Upon receiving a signal from a mobile device or an RFID tag placed on an item, such as a bracelet or cane, the processing and control unit detects and analyzes the information associated with the signal, which is identified through the user's name extension and/or prior registration, to determine the profile and needs of the detected user. Based on this information, the system dynamically adapts the operation of the intelligent signaling or sends alerts to meet the specific needs of each user.

In some embodiments, the reception and control module of the system is further configured to receive and analyze information from Internet of Things (IoT) systems, such as surveillance systems or other environmental data sensors.

The adaptations in the signage vary depending on the type of user and the device involved. These adaptations may include, among others:
- Specific lighting of pictograms: Adjustments to the intensity, color, or flashing frequency of lights on informational displays in public places within the urban core, in order to optimize the clarity and effectiveness of the information. Similarly, in signage directed at all road users, with special attention to cyclists, pedestrians at crossings, and individuals with special visual needs.
- Adjustment of auditory signals: Activation of audible and visual alerts, especially targeting users with hearing impairments or elderly individuals who may require a more noticeable alert. For example, for individuals with Autism Spectrum Disorder (ASD), calming sounds may be activated or potentially stressful noises neutralized. Additionally, audio messages or visual panels may be used to provide notifications to other users, promoting awareness and encouraging behavior to minimize distress.
- Adapted audio messages: Playback of personalized audio messages that provide additional information or specific instructions in complex traffic situations or in sensitive environments such as hospitals and schools. These messages are designed to improve user understanding and guide appropriate actions, ensuring safety and facilitating navigation for users with various needs.
- Warning panels or screens: Panels displaying messages that promote caution and consideration for people with special needs. For example, a message could be added such as: "Please maintain silence as much as possible, as there are individuals with specific needs in this area." This type of message can be adjusted to appropriately reflect the particular needs of individuals present, ensuring a respectful and accessible environment for all.
- Increased visibility: In areas with high traffic density or bike lanes, the system can intensify lighting or activate additional signals to ensure that cyclists and users of Personal Mobility Vehicles (VMPs) are more visible to other drivers.
- Automatic activation of accessibility devices: To facilitate access to public buildings or public transportation, the system can automatically operate the access ramp upon detecting a person with a specific condition that requires it, or activate a path with illuminated pavement tiles to assist in their mobility.
- Alarms and alerts: Implementation of alarms to notify family members or caretakers. For example, in cases where students deviate from their designated route to school or the transport loading area, as well as for elderly individuals or those requiring assistance. These alerts ensure a quick response to guarantee the safety and well-being of individuals who need special supervision.

This comprehensive approach not only significantly enhances road safety but also provides an adaptable platform that incorporates new technologies and responds to the changing needs of users in dynamic urban environments, making mobility more comfortable, effective, and safe.

This system introduces a significant improvement over updated signaling systems, which are generic but not adaptive to the circumstances of each citizen. Unlike these current solutions, the IDAI system stands out for its ability to combine dynamic signage and user role definition for each citizen, adapting the environment in real-time to the specific needs of each user present in the surroundings and interacting with them. This is achieved through two key aspects:
1. Real-time adaptability: The IDAI system uses Bluetooth^{®} technology or, alternatively, RFID to identify users while connecting. Additionally, in some implementations, the system communicates with loT systems equipped with sensors or cameras that allow real-time identification of specific circumstances in each space (moving vehicles and active or idle smart signage, open or closed doors, and other similar systems) and automatically adapt visual, auditory, and sensory signals, as well as alerts/calls to professionals or family members, according to the user's preferences or needs.
2. Inclusivity and personalization: The system focuses on the integration and safety of all users, beyond pedestrians, including cyclists, elderly individuals, students, and those with visual, auditory, or any other types of disabilities. This inclusive approach ensures that urban environment signage is not only accessible to everyone but also provides a personalized experience that enhances safety and comfort.

Based on the prior art, the objective of the present invention is to develop an intelligent signage system aimed at facilitating mobility and improving the safety of all users in the urban environment, including those with special needs, elderly individuals, and vulnerable transportation users. This system achieves the following objectives:
1. Installation of Adaptive Signage: Implement signage in urban areas that dynamically adapts to the needs of users, contributing to efficient, safe, and sustainable mobility. Strategic locations for the installation of these devices include, but are not limited to:
   - Pedestrian crossings and traffic intersections.
   - Accessibility and mobility in public spaces and buildings.
   - Bicycle lanes.
   - Sidewalks with high pedestrian density.
   - Parks and recreational areas.
   - Public transportation stations or terminals.
2. Use of Mobile Devices with Bluetooth^{®} or, Alternatively, RFID: The system is easily integrated using mobile devices with Bluetooth^{®} enabled or, alternatively, RFID tags carried by users. Each user can configure the signal emitted by their mobile device or tag with their name accompanied by numerical or alphanumeric characters as a form of personal identification, allowing the identification of their specific needs or preferences. Some examples of the various applications of the system include:
   - Elderly individuals could configure their device with a tag or personal ID, such as ("name".ID.OLD). This would allow alerts to be sent to registered family members recognized by the tag, with "ID" being a numerical or alphanumeric combination that identifies the user. For example, if the device detects that an identifying signal of the person has moved outside a predefined perimeter registered by the competent authority, it will send the alert.
   - Individuals with Autism Spectrum Disorder (ASD) could use the configuration "name".TEA to activate specific responses from the signage, such as the emission of calming sounds or adjustments in lighting. Similarly, this signal or tag configuration can include a numerical or alphanumeric identification specifying the needs of these users ("name".ID.TEA"). For example, when this person enters a hospital, station, terminal, etc., the system will send an alert to qualified personnel who can assist and/or accompany them.
3. Signage receivers in urban areas: The mentioned signage devices will be equipped with Bluetooth^{®} receivers or RFID tag detectors that continuously and automatically monitor the environment, detecting signals emitted by nearby mobile devices or RFID tags. These receivers will identify and analyze the signals to determine the user's needs and take appropriate action.
4. Real-time classification and response: Upon detecting a signal, the system automatically analyzes and classifies the user's profile based on the information contained in the Bluetooth^{®} signal or RFID tag. This enables the signage to adjust its operation in real-time to meet the specific needs of the user or perform functions such as sending alerts. In this way, the system can monitor children traveling alone to school, sending notifications to their caregivers or legal guardians if the child deviates from the established route. Additionally, it can issue alerts directly to the user through vibrations, flashing lights, or voice messages, provided their device allows it.
5. Adaptation of signage and urban mobility elements: Upon detecting the presence of a user with specific needs, the signage and mobility elements will automatically adjust their behavior. For example:
   - Increasing the visibility of signs for cyclists in high-traffic areas.
   - Activating additional acoustic or visual signals, such as panels, lighted pavement markings, or illuminated pictograms, to alert vulnerable users in interactions with other users or vehicles.
   - Activating access ramps to buildings or public transportation.
   - Issuing personalized alerts or visual icons through audio devices and panels located in spaces such as stations, terminals, hospitals, schools, parks, or recreational areas, to inform users that there are individuals in the space who require a modification of behavior from others for their well-being and to minimize their discomfort. For example, "THIS SPACE CONTAINS INDIVIDUALS WITH SPECIAL NEEDS, PLEASE LOWER YOUR VOICE."
6. The invention has the capability for data collection and urban analysis: The system could gather information on road usage in various urban areas using existing loT technologies. This data could be stored in municipal applications for later analysis, enabling improvements in urban planning and the creation of more comfortable, safe, and adapted environments.
7. The invention has the capability of integration with other technological systems:
   the systems could integrate with surveillance technologies, traffic control systems, and environmental parameter sensors, expanding their usefulness and providing a comprehensive solution for urban management.

## Claims

1. Intelligent, Dynamic, adaptative, and inclusive signaling system intended for deployment in urban environments, comprising.
- A mobile device (1) that includes a Bluetooth communication module and is configured to continuously keep the Bluetooth communication module active, transmitting information related to a user, including at least their name, condition, and specific needs;
- An RFID tag (2) that includes a unique identification, configured to adhere to a personal object of the user, and containing information related to the user, including at least their name, condition, and specific needs;
- A reception and control module (3), deployed in urban signaling and mobility elements (4), which includes a Bluetooth receiver, an RFID detector, and a processing unit; and is configured to detect and analyze the Bluetooth or RFID signals emitted by the mobile device or the RFID tag; and modify the behavior of the signaling and mobility elements based on the user's information.

2. The intelligent, dynamic, adaptive, and inclusive signaling system according to claim 1, wherein the reception and control module is further configured to modify the behavior of the urban signaling and mobility elements by activating or deactivating acoustic signals and activating sound alerts and/or modifying their intensity.

3. The intelligent, dynamic, adaptive, and inclusive signaling system according to the previous claims, wherein the reception and control module is further configured to modify the behavior of the urban signaling and mobility elements by manipulating and automatically activating access ramps or accessibility devices.

4. The intelligent, dynamic, adaptive, and inclusive signaling system according to the previous claims, wherein the reception and control module is further configured to activate and modify the activity of visual signals or pictograms by adjusting the intensity, color, or blinking frequency of the lights.

5. The intelligent, dynamic, adaptive, and inclusive signaling system according to the previous claims, wherein the reception and control module is further configured to modify the behavior of the signaling and urban mobility elements by emitting adapted audio messages.

6. The intelligent, dynamic, adaptive, and inclusive signaling system according to the previous claims, wherein the reception and control module is further configured to modify the behavior of the signaling and urban mobility elements when the presence of users with special needs is detected, generating calming sounds or neutralizing potentially stressful noises, and providing audio or visual panels with notifications to raise awareness among other users.

7. The intelligent, dynamic, adaptive, and inclusive signaling system according to the previous claims, wherein the reception and control module further comprises an alert module (5), configured to generate and send alerts when it is detected that the user of the system enters or exits a defined perimeter.

8. The intelligent, dynamic, adaptive, and inclusive signaling system of the previous claims, further comprising a server configured to store the information processed by the reception and control module.

9. The intelligent, dynamic, adaptive, and inclusive signaling system of the previous claims, wherein the reception and control module is further configured to receive and analyze information from Internet of Things (IoT) systems used to modify the behavior of signaling and urban mobility elements based on the user's information.
